# EUROPÄISCHE PATENTSCHRIFT

(11) **EP 0 903 414 B1**
(45) Veröffentlichungstag und Bekanntmachung des Hinweises auf die Patenterteilung: **15.10.2003**
(21) Anmeldenummer: 98890243.3
(22) Anmeldetag: 20.08.1998
(51) Int. Cl.: C21D 9/60, C21D 9/573

(54) **Anlage zur kontinuierlichen Wärmebehandlung von Stahlbändern**
Device for the continuous heat treatment of steel strip
Installation de traitement thermique en continu de bandes d'acier

(30) Priorität: 22.09.1997 AT 159797
(43) Veröffentlichungstag der Anmeldung: 24.03.1999
(73) Patentinhaber: Ebner, Peter Helmut, Dipl.-Ing., 4060 Leonding (AT); Lochner, Heribert, Dipl.-Ing., 4060 Leonding (AT)
(72) Erfinder: Ebner, Peter Helmut, Dipl.-Ing., 4060 Leonding (AT); Lochner, Heribert, Dipl.-Ing., 4060 Leonding (AT)
(74) Vertreter: Hübscher, Gerhard, Dipl.-Ing.

(56) Entgegenhaltungen:
- EP-A- 0 083 291
- DE-C- 888 181
- FR-A- 1 466 448
- FR-A- 2 288 152
- GB-A- 2 124 660
- US-A- 4 117 295
- US-A- 4 863 145

## Beschreibung

Die Erfindung betrifft eine Anlage zur kontinuierlichen Wärmebehandlung eines Stahlbandes, bestehend aus einem Gehäuse mit mindestens zwei in einem Abstand voneinander angeordneten, parallelachsigen, unbeheizten Rollen, über die das Stahlband in einer geschlossenen Leiterschleife kontinuierlich geführt ist, mit einer ein Trum der Leiterschleife umschließenden elektrischen Induktionseinrichtung und mit einer Kühleinrichtung für das erwärmte Stahlband.

Metallhalbzeug, insbesondere Stahlband od. dgl., muß, um ein für den späteren Verwendungszweck notwendiges Gefüge zu erhalten, vorerst einer Wärmebehandlung unterzogen werden. Eine dieser Wärmebehandlungen ist das Vergüten. Bei diesem Vorgang wird das Stahlband je nach Zusammensetzung des Kohlenstoffgehaltes und der übrigen Legierungsbestandteile auf ein Temperaturniveau von über AC 3 gebracht, anschließend rasch abgekühlt, also abgeschreckt, und auf einem niedrigeren Temperaturniveau angelassen.

Es ist bekannt, die Erwärmung des Stahlbandes in Induktionsanlagen oder in Öfen mit oder ohne Glühmuffeln und die nachfolgende Abschreckung in Flüssigmetall- oder Ölbädern bzw. in einem Schutzgasstrom durchzuführen. Es ist auch bekannt, die Erwärmung in Wirbelbettanlagen oder in Flüssigmetallbädern, in denen das Bad als Stromzufuhrkontakt ausgebildet ist und das zu glühende Band wie eine elektrische Widerstandsheizung dient, zu erzielen.

Die Erwärmung von Nichteisenbändern, die in einer geschlossenen Leiterschleife kontinuierlich um zwei mit Abstand zueinander angeordnete Rollen geführt sind, ist aus der GB 2 124 660 A bekannt, wobei das erwärmte Band im Anschluß an den Glühvorgang zum Abschrecken mittels einer Kühlflüssigkeit gekühlt wird.

Alle diese Anlagen bzw. Einrichtungen haben verschiedene Mängel. Da anhaftende Reste von Öl oder Flüssigmetall vom Band oberflächlich aus dem Bad ausgeschleppt werden, ergibt sich eine entsprechende Umweltbelastung. Erfolgt die Erwärmung durch Strahlung, sind lange, komplizierte und teure Öfen erforderlich. Bei Gasabschreckbädern wird in vielen Fällen nicht die notwendige Abschreckgeschwindigkeit erzielt, wobei überdies ein hoher Energieaufwand erforderlich ist.

Eine Vorrichtung zum Abschrecken eines mittels Wirbelströmen bereichsweise aufgeheizten Drahtes an einer von Kühlflüssigkeit durchströmten Umlenkrolle zeigt die US 4 863 145 A, wobei der Draht allerdings nur von einer Seite her gekühlt wird.

Aufgabe der Erfindung ist es, diese Mängel zu beseitigen und eine Anlage zur kontinuierlichen Wärmebehandlung von Stahlbändern zu schaffen, die einen verhältnismäßig geringen Konstruktionsaufwand erfordert, eine Energieeinsparung durch einfache Energieübertragung ergibt, keine umweltbelastenden Abschreckmedien benötigt und eine gute Regelmöglichkeit der Temperatur erlaubt.

Die Erfindung löst die gestellte Aufgabe dadurch, daß ein isoliertes, unmagnetisches Gehäuse vorgesehen ist und die Induktionseinrichtung einen das Gehäuse durchsetzenden Ringkern aus einem Transformatorblechpaket mit einer außerhalb des Gehäuses angeordneten Erregerwicklung aufweist und daß die das zu- und ablaufende Stahlband aufnehmende Rolle einerseits und das zulaufende Stahlband andererseits die Kühleinrichtung bilden.

Es ist also eine einfache Energieübertragung durch den Transformator ermöglicht und das Abschrecken ergibt eine Energieeinsparung, da beim Abkühlen des Stahlbandes auf der ersten Rolle, die man als Abschreckrolle bezeichnen kann, das zugeführte Stahlband als Abschreckmittel dient und gleichzeitig vorerwärmt wird, wobei der Aufbau der Anlage keinen großen Konstruktionsaufwand erfordert. Günstig ist es, wenn im Bereich der ersten Rolle, also der Abschreckrolle, Hilfseinrichtungen für die Einstellung einer gleichbleibenden Temperaturhöhe und -verteilung vorgesehen sind. Diese Hilfseinrichtungen können eine elektrische Heizeinrichtung, Kühleinrichtungen sowie eine Umwälzeinrichtung sein.

Um eine ungewünschte Oxidation des Stahlbandes während der Wärmebehandlung zu vermeiden, ist das Gehäuse mit einem Schutzgas gefüllt, das aus Stickstoff, Wasserstoff oder einem Gemisch daraus bestehen kann. Es ist aber auch möglich, andere, nicht oxidierende Gase oder Gasgemische zu verwenden.

Der Energietausch kann auch über der ersten Rolle vorgeordnete Temperaturabschreckplatten erfolgen. Selbstverständlich ist es möglich, die Anlage für mehrere Stahlbänder nebeneinander auszubilden.

In der Zeichnung ist der Erfindungsgegenstand beispielsweise dargestellt, und zwar zeigen
- Fig. 1: das Grundschema einer Anlage zur Wärmebehandlung von Stahlbändern und die
- Fig. 2 und 3: konstruktive Abwandlungen.

In einem isolierten unmagnetischen Gehäuse 1 sind zwei parallelachsige Rollen 2, 3 mit Abstand voneinander angeordnet. Das zu behandelnde Stahlband 4 wird über eine Eintrittsöffnung 5 und eine Umlenkrolle 6 der ersten Rolle 2 zugeführt, läuft zur zweiten Rolle 3 und dann durch ein Transformatorblechpaket 7 zurück zur Rolle 2, wo es das einlaufende Band vorerwärmt und von diesem sowie von der Rolle 2 nach seiner Erwärmung im Blechpaket abgeschreckt wird. Über eine der Bandkreuzung beim Bandverlauf dienende Umlenkrolle 8 führt das Stahlband 4 zum Auslaß 9.

Das Stahlband 4 bildet im Transformatorblechpaket 7 die Sekundärwicklung, während die Primärwicklung 10 außerhalb des Gehäuses 1 angeordnet ist und eine der gewünschten Banderwärmung durch Leistungsübertragung angepaßte Windungszahl aufweist. Im Gehäuse 1 wird durch die elektrische Heizung 11 und Kühleinrichtungen 12 ein gleichbleibendes Temperaturniveau und eine gleichmäßige Temperaturverteilung sichergestellt. Das Gehäuse 1 ist mit einem Schutzgas gefüllt.

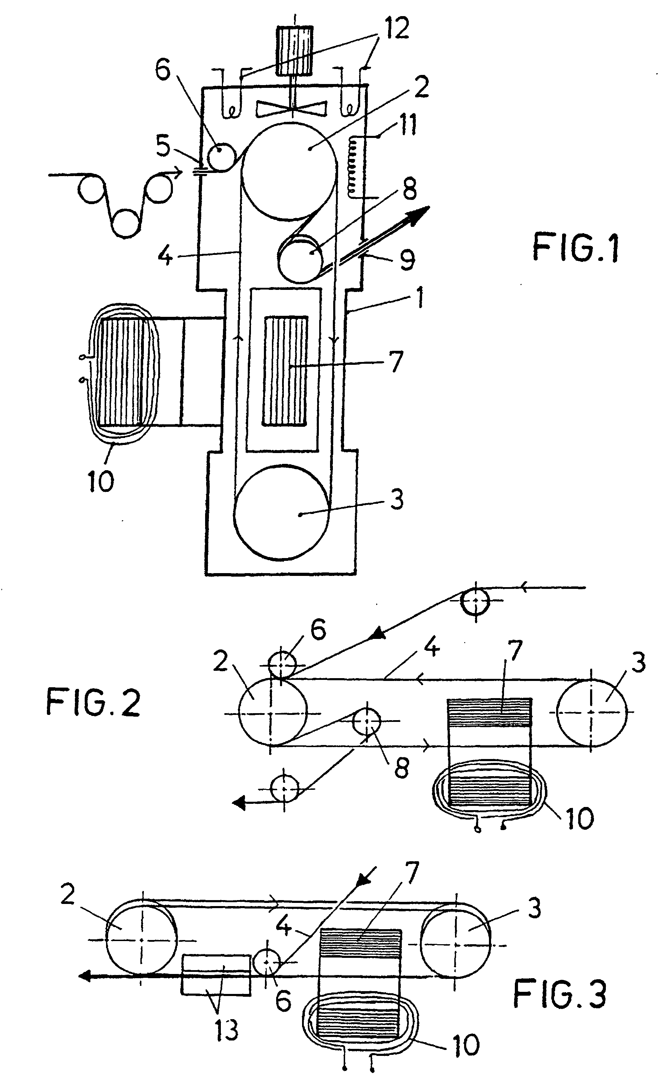

Fig. 2 zeigt das Schema einer etwas abgewandelten Ausführung der Anlage, während bei der waagrecht angeordneten Anlage nach Fig. 3 mehrere Bänder 4 od. dgl. gleichzeitig behandelt werden und der abführenden Rolle 2 Temperaturabschreckplatten 13 vorgeordnet sind. Bei mehradrigem Betrieb ist eine symmetrische Belastung des elektrischen Netzes möglich, wie überhaupt eine gute Regelmöglichkeit der Temperatur durch Steuerung der Energiezufuhr auf der Primärseite des Transformators, z. B. Triac, erzielt werden kann.

## Patentansprüche

1. Anlage zur kontinuierlichen Wärmebehandlung eines Stahlbandes, bestehend aus einem Gehäuse mit zwei in einem Abstand voneinander angeordneten, parallelachsigen, unbeheizten Rollen, über die das Stahlband in einer geschlossenen Leiterschleife kontinuierlich geführt ist, mit einer ein Trum der Leiterschleife umschließenden elektrischen Induktionseinrichtung und mit einer Kühleinrichtung für das erwärmte Stahlband, **dadurch gekennzeichnet, daß** ein isoliertes, unmagnetisches Gehäuse vorgesehen ist und die Induktionseinrichtung einen das Gehäuse (1) durchsetzenden Ringkem aus einem Transformatorblechpaket (7) mit einer außerhalb des Gehäuses (1) angeordneten Erregerwicklung (10) aufweist und daß die das zu- und ablaufende Stahlband (4) aufnehmende Rolle (2) einerseits und das zulaufende Stahlband (4) andererseits die Kühleinrichtung bilden.

2. Anlage nach Anspruch 1, **dadurch gekennzeichnet, daß** im Gehäuse (1) im Bereich der ersten Rolle (2) Hilfseinrichtungen (11, 12) für die Einstellung einer gleichbleibenden Temperaturhöhe und -verteilung vorgesehen sind.

3. Anlage nach den Ansprüche 1 und 2, **dadurch gekennzeichnet, daß** das Gehäuse (1) mit Schutzgas gefüllt ist.

4. Anlage nach den Ansprüchen 1 bis 3, **dadurch gekennzeichnet, daß** der ersten Rolle (2) Temperaturabschreckplatten (13) vorgeordnet sind.

5. Anlage nach den Ansprüchen 1 bis 4, **dadurch gekennzeichnet, daß** die Anlage für mehrere Stahlbänder nebeneinander ausgebildet ist.

## Claims

1. An installation for continuous heat treatment of a steel strip, comprising a housing with two spaced-apart axis-parallel unheated rollers over which the steel strip is continuously conveyed in a closed conductor loop, and comprising an electric induction device surrounding a strand of the loop and also comprising a device for cooling the heated steel strip, **characterised in that** an insulated nonmagnetic housing is provided and the induction device comprises an annular core consisting of a transformer lamination stack (7) extending through the housing (1), with a field winding (10) disposed outside the housing (1), and **in that** the cooling device is formed on the one hand by the incoming steel strip (4) and on the other hand by the roller (2) which receives the steel strip (4) as it enters and exits.

2. An installation according to claim 1, **characterised in that** auxiliary devices (11, 12) for maintaining a uniform temperature and a uniform temperature distribution are provided in the housing (1) in the neighbourhood of the first roller (2).

3. An installation according to claims 1 and 2, **characterised in that** the housing (1) is filled with protective gas.

4. An installation according to claims 1 to 3, **characterised in that** chill plates (13) are disposed in front of the first roller (2).

5. An installation according to claims 1 to 4, **characterised in that** it is constructed for a number of steel strips side by side.

## Revendications

1. Installation de traitement thermique en continu d'une bande d'acier, composée d'un boîtier avec au moins deux rouleaux, non chauffés, à axes parallèles, disposés à distance l'un de l'autre, sur lesquels la bande d'acier est guidée de façon continue en formant une boucle conductrice fermée, avec un dispositif à induction électrique, entourant un brin de la boucle conductrice, et avec un dispositif de refroidissement pour la bande d'acier chauffée, **caractérisée en ce qu'**est prévu un boîtier non magnétique, isolé et le dispositif à induction présente un noyau annulaire, traversant le boîtier (1), formé d'un paquet de tôles de transformateur (7) avec un enroulement excitateur (10) disposé à l'extérieur du boîtier (1), et **en ce que** le rouleau (2), supportant la bande d'acier arrivant et sortant (4), d'une part, et la bande d'acier arrivant (4), d'autre part, forment le dispositif de refroidissement.

2. Installation selon la revendication 1, **caractérisée en ce que**, dans le boîtier (1), dans la zone du premier rouleau (2), sont prévus des dispositifs auxiliaires (11, 12) pour régler une hauteur et une distribution de température constante.

3. Installation selon les revendications 1 et 2, **caractérisée en ce que** le boîtier (1) est rempli d'un gaz protecteur.

4. Installation selon les revendications 1 à 3, **caractérisée en ce que** des plaques d'abaissement brutal de la température (13) sont prévues devant le premier rouleau (2) .

5. Installation selon les revendications 1 à 4, **caractérisée en ce que** l'installation est réalisée pour traiter plusieurs bandes d'acier les unes à côté des autres.
